# FASCICULE DE BREVET EUROPEEN

(11) **EP 2 608 947 B1**
(45) Date de publication et mention de la délivrance du brevet: **13.06.2018**
(21) Numéro de dépôt: 11761668.0
(22) Date de dépôt: 25.08.2011
(51) Int. Cl.: B29C 65/74, B26F 1/02, B26D 7/08, B29C 65/08, B29C 65/78, B60R 19/48

(54) **MACHINE POUR POINCONNER ET/OU SOUDER SUR UNE PEAU DE PARE-CHOCS**
MASCHINE ZUM STANZEN UND/ODER SCHWEISSEN AUF EINE STOSSSTANGENVERKLEIDUNG
MACHINE FOR STAMPING AND/OR WELDING ONTO A BUMPER SKIN

(30) Priorité: 26.08.2010 FR 1056790
(43) Date de publication de la demande: 03.07.2013
(73) Titulaire: Compagnie Plastic Omnium, 69007 Lyon (FR)
(72) Inventeur: VIRELIZIER, François, 38080 Saint-Marcel-Bel-Accueil (FR)
(74) Mandataire: Remy, Vincent Noel Paul
(86) Numéro de dépôt international: PCT/FR2011/051964
(87) Numéro de publication internationale: WO 2012/025698

(56) Documents cités:
- EP-A1- 1 798 019
- EP-A1- 2 070 668
- EP-A2- 1 586 427
- DE-A1-102009 019 644

## Description

La présente invention concerne une machine pour souder et/ou poinçonner sur une peau de pare-chocs, par exemple pour y fixer des capteurs d'aide au stationnement ou des lave-projecteur ou encore des grilles ou des renforts.

Pour réaliser de telles opérations sur des peaux de pare-chocs, on utilise déjà des machines du type constitué par un châssis qui porte des structures escamotables, lesquelles supportent des outils de poinçonnage et/ou de soudage. Le mouvement des structures escamotables permet de dégager de la place au-dessus d'un emplacement recevant une peau de pare-chocs, pour faciliter la manipulation et le positionnement de cette peau. Une fois la peau en place, les structures mobiles sont ramenées dans leur position opérationnelle, permettant le fonctionnement des outils. Le fonctionnement des outils peut impliquer le déclenchement de vérins qui déplacent lesdits outils pour les amener au contact de la peau.

En plus des structures escamotables, sont prévues des protections amovibles et/ou fixes (immatérielles, type rideau infra-rouge), dont la fonction est d'empêcher tout contact entre un utilisateur et les outils en mouvement, lesquels sont considérés comme dangereux du fait de leurs déplacements, sous l'effet des vérins précités. Les protections sont des écrans de grande taille qui s'intercalent entre l'utilisateur et la peau, en étant éventuellement couplés aux structures escamotables.

EP1798019 divulgue un exemple d'un tel écran, sous la forme d'un rideau lumineux de sécurité et/ou d'une grille.

DE 10 2009 019 644, qui constitue un droit national antérieur au sens de l'article 139(2) CBE, divulgue un écran de écran de protection de dimensions équivalentes à celles de la machine.

Un des problèmes que l'invention cherche à résoudre est celui de l'encombrement de tels dispositifs. Cet encombrement a un coût en termes d'occupation de l'espace, de durée de cycle (les temps de déplacement étant d'autant plus long que les envergures de déplacement sont grandes) et de maintenance. Un autre problème est celui du coût des investissements directs que représentent les systèmes de protection eux-mêmes.

L'invention a pour objet une machine de poinçonnage et/ou soudage sur une peau en matière plastique d'une pièce de carrosserie de véhicule automobile selon la revendication 1.

Au sens de l'invention, le caractère mobile des outils vient du fait qu'ils effectuent des mouvements, en général de faible amplitude, pendant l'opération de poinçonnage et/ou soudage. Le fait que les outils soient par ailleurs escamotables et subissent des déplacements de plus grande amplitude visant à les dégager pour faciliter la mise en place de la peau n'est pas considéré, au sens de l'invention, comme une mobilité des outils, car il ne s'agit pas d'une mobilité pendant l'opération de poinçonnage et/ou soudage.

On entend par « au contact ou à proximité immédiate de la peau », le fait d'être à distance nulle ou de quelques dixièmes de millimètres de la peau, c'est-à-dire prêt à réaliser sur la peau l'opération prévue de poinçonnage et/ou soudage.

Un avantage de l'invention est que, comme on utilise la peau pour délimiter le volume de sécurité à l'intérieur duquel les outils mobiles effectuent leurs petits mouvements permettant le poinçonnage et/ou le soudage, on limite le volume de sécurité au strict nécessaire et on évite les inconvénients des structures escamotables de l'état de la technique.

Selon l'invention, l'écran de protection qui complète éventuellement la peau de pare-chocs dans la délimitation du volume de sécurité peut être fixe ou mobile, matériel ou immatériel.

L'invention peut s'appliquer à différentes pièces en matière plastique d'une pièce de carrosserie de véhicule automobile, notamment à des peaux de pare-chocs, ou des peaux d'ailes ou des jupes, une jupe étant une paroi prolongeant un pare-chocs vers le bas, à l'avant ou à l'arrière d'un véhicule automobile.

Lorsque l'invention s'applique à une peau comportant des retours latéraux (également désignés « crosses ») donnant une forme concave à la peau et délimitant un volume intérieur dans la concavité de la peau, deux modes de réalisation sont envisageables. Dans un premier mode de réalisation, le support est agencé pour recevoir une peau orientée avec ses retours latéraux dirigés vers le bas. Dans un second mode de réalisation de l'invention, le support est agencé pour recevoir une peau orientée avec ses retours latéraux dirigés vers le haut.

Si la machine ne réalise qu'un soudage sans poinçonnage, il est avantageux, selon l'invention, que le support soit agencé pour recevoir une peau orientée avec ses retours latéraux dirigés vers le haut.

Si la machine réalise un poinçonnage et éventuellement un soudage, il est avantageux, selon l'invention, que le support soit agencé pour recevoir une peau orientée avec ses retours latéraux dirigés vers le bas.

L'invention sera mieux comprise à la lecture de la description qui va suivre, qui ne présente aucun caractère limitatif mais est donnée uniquement à titre d'exemples, en référence aux dessins annexés, dans lesquels :
- la figure 1 est une vue en perspective d'une machine de soudage selon un premier exemple de réalisation de l'invention,
- la figure 2 est une vue schématique en coupe d'une machine de poinçonnage et soudage, selon un deuxième exemple de réalisation de l'invention, la machine étant dans une position permettant les opérations de poinçonnage et/ou soudage.
- la figure 3 est une vue en coupe selon II-II de la figure 2, la machine étant dans une position préalable au début des opérations de poinçonnage et/ou soudage.

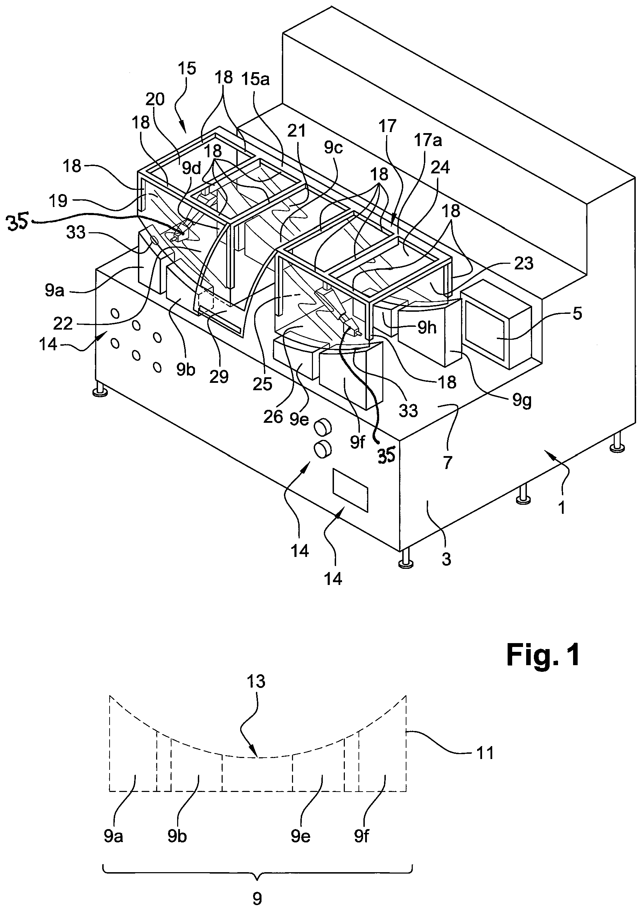

Sur la figure 1, les numéros de référence suivants désignent les éléments suivants.
1 désigne globalement la machine.
3 désigne le châssis de la machine.
5 est un écran de contrôle.
7 est un plan de travail.
9 est un support qui est fixé sur le plan de travail 7. Le support 9 est ici divisé en sections disjointes 9a, 9b, 9c, 9d, 9e, 9f, 9g, 9h mais qui, ensemble, s'inscrivent dans un volume reproduit schématiquement en pointillés dont la face de base 11 est plane et repose sur le plan de travail 7, et la dont la face supérieure 13 épouse la forme galbée d'une peau de pare-chocs.
14 désigne globalement des boutons de commandes, capteurs, connecteurs et autres dispositifs sans lien direct avec l'invention et dont le détail ne sera pas fourni ici.
15 et 17 sont des structures parallélépipédiques constituées par des barres métalliques 18 placées aux arêtes desdites structures. Chaque structure est rendue escamotable par le fait qu'elle est montée pivotante autour d'une charnière placée sur son arête supérieure horizontale arrière 15a, 17a et comporte, sur sa face horizontale supérieure et sur ses faces verticales avant et latérales, des écrans de protection transparents 19, 20, 21, 22, 23, 24, 25, 26. En position escamotée, les structures escamotables 15, 17 libèrent de la place au-dessus du support 9, ce qui permet la mise en place d'une peau de pare-chocs (non représentée) sur le support 9 sans risque de la rayer.

Les deux structures escamotables 15, 17 sont solidarisées entre elles et manoeuvrables grâce à une poignée commune 29 fixée à cheval entre les arêtes supérieures des deux structures.

Les écrans de protection 19, 21, 22, 23, 25, 26 sont découpés de manière à coïncider avec la forme d'une peau de pare-chocs (non représentée) posée sur le support 9. Ainsi, chaque écran avant 22, 26 suit la forme galbée intérieure de la peau de pare-chocs et chaque écran latéral intérieur et extérieur 21, 25 et 19, 23 suit la section transversale de la peau de pare-chocs.

Lorsque les structures escamotables 15 et 17 sont rabattues en position opérationnelle, comme c'est le cas sur la figure 1, les écrans et la peau de pare-chocs (non représentée) coopèrent pour délimiter ensemble un volume fermé (ou presque fermé, aux jeux près et selon les normes d'ergonomie et de sécurité applicables).

A l'intérieur de ce volume fermé, des outils mobiles 35 de soudage sont portés par les structures 15 et 17. Chaque outil mobile de soudage est en réalité une moitié d'un ensemble de soudage comprenant un outil mobile 35 et un outil fixe 33, qui doivent être disposés de part et d'autre de la peau du pare-chocs pour la souder. Dans le cas de la figure 1, les outils mobiles 35 portés par les structures 15, 17 sont des sonotrodes mobiles, aptes à passer d'une position d'attente, distante de la peau, à une position de travail, contre la peau, grâce à des vérins, et les outils fixes 33 sont des enclumes intégrées dans les sections 9a et 9f du support 9. Lorsque les structures 15, 17 sont escamotées, les outils mobiles 35 sont en position escamotée, où ils sont éloignés du support et ne gênent pas la mise en place d'une peau de pare-chocs sur le support 9. Lorsque les structures 15, 17 sont en position opérationnelle, les outils mobiles 35 sont convenablement positionnés en position d'attente par rapport à la peau de pare-chocs pour pouvoir réaliser les opérations de soudage souhaitées sur la peau de pare-chocs. Dans cette position d'attente, les outils mobiles sont pratiquement au contact de la peau. Si nécessaire, les outils mobiles 35 peuvent se déplacer sur une faible course pour venir au contact de la peau de pare-chocs (ils comportent des vérins à cet effet), mais leur déplacement se limite alors au petit volume de sécurité défini par les écrans 19, 21, 23, 25, 27, 29, 31 et la peau de pare-chocs.

Pendant les opérations de soudage, les outils mobiles subissent éventuellement de petits déplacements nécessaires à la réalisation du soudage proprement dit.

Les outils mobiles évoluent donc dans le volume de sécurité défini conjointement par les écrans et la peau de pare-chocs. Dans l'exemple décrit, les outils 35 sont à la fois mobiles et escamotables, mais leur mobilité résulte de leurs petits déplacements pendant l'opération de soudage et non de la manoeuvre des structures 15 et 17.

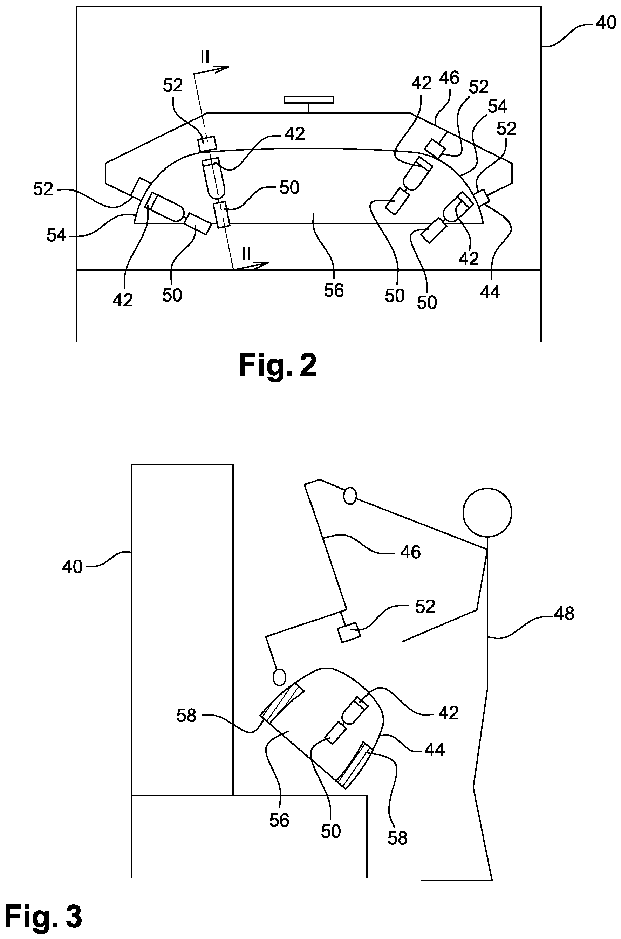

Dans l'exemple de réalisation des figures 2 et 3, on a représenté schématiquement une machine 40 pour la pose de supports de capteurs à ultrasons 42 d'aide au stationnement sur une peau de pare-chocs 44. De tels supports 42 se mettent en place grâce à des outillages spécifiques réalisant, en une seule fois, non seulement le poinçonnage mais également l'insertion et la soudure finale de fixation. Comme précédemment, la machine 40 comporte une structure escamotable 46, manoeuvrable par l'utilisateur 48 entre une position escamotée et une position opérationnelle.

Contrairement à l'exemple de la figure 1, la structure escamotable 46 ne comporte pas d'écrans de protection et la peau de pare-chocs 44 se positionne crosses vers le bas, grâce à un support adapté, dont quelques portions 58 sont visibles sur la section de la figure 3.

Chaque outillage spécifique est constitué par deux outils mobiles, à savoir un premier outil mobile 50, fixé sur le support, et un deuxième outil mobile 52 porté par la structure escamotable 46. Le premier outil mobile 50 est constitué par une matrice (qui assure une contre-réaction pour le poinçonnage) et un porte support/sonotrode, capables de réaliser, l'une derrière l'autre, les opérations de poinçonnage de la peau 44, de maintien d'un support de capteur d'aide au stationnement 42 et de soudure de ce support de capteur à la peau. Ces opérations nécessitent le déplacement de l'outil mobile 50 à partir de sa position d'attente. Le deuxième outil mobile 52 est constitué par un poinçon/dévétisseur et une enclume (qui assure une contre-réaction pour la soudure), le poinçon/dévétisseur peut être mu par un vérin (non représenté) qui l'amène, depuis une position escamotée, en retrait de la peau 44, jusqu'en position de travail, mais ce mouvement n'est pas réalisé pendant les opérations de poinçonnage et soudage. Pendant lesdites opérations de poinçonnage et soudage, l'outil mobile 52 subit de petits déplacements mais en direction de l'intérieur de la peau, de sorte qu'il passe de sa position de travail, au contact ou à proximité immédiate de la peau, à des positions dans lesquelles ses parties potentiellement dangereuses pour un opérateur pénètrent dans la peau, ou traversent la peau pour se retrouver dans le volume intérieur de la peau.

Sur cette machine 40, le support 58 est agencé de manière que la peau de pare-chocs 44 est orientée avec ses retours latéraux 54, ou crosses, dirigés vers le bas, en délimitant, avec les portions 58 du support qui jouent aussi le rôle d'écrans, un volume intérieur 56 dans sa concavité. Ce volume 56 constitue un volume de sécurité à l'intérieur duquel évoluent les outils mobiles 50 pendant les opérations de poinçonnage et soudage.

Dans les exemples décrits ci-dessus, on voit que, grâce au support et à l'agencement des outils mobiles, la peau de pare-chocs procure tout ou partie des écrans protecteurs permettant d'assurer la protection des opérateurs travaillant sur la machine.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Machine (1, 40) de poinçonnage et/ou soudage sur une peau en matière plastique d'une pièce de carrosserie de véhicule automobile (44), comprenant des outils mobiles (35, 52) de poinçonnage et/ou soudage dont chacun est réglé pour réaliser une opération de poinçonnage et/ou soudage, cette opération de poinçonnage et/ou soudage étant réalisée en trois temps :
a) déplacement depuis une position escamotée, à distance de la peau (44), pour venir dans une position de travail, au contact ou à proximité immédiate de la peau,
b) réalisation du poinçonnage et/ou du soudage, puis
c) retour en position escamotée, la machine comprenant, en outre, un support (9, 58) destiné à recevoir la peau (44) dans une position prédéterminée, et dans laquelle le support (9, 58) et les outils mobiles (35, 50) sont agencés de manière à ce que la peau, une fois positionnée sur le support (9, 58), délimite, en étant éventuellement complétée par un écran de protection (19, 20, 21, 22, 23, 24, 25, 26, 58), un volume de sécurité (56) à l'intérieur duquel les outils mobiles (35, 50) évoluent pour réaliser les opérations de poinçonnage et/ou soudage sur la peau, la machine étant **caractérisée en ce qu'**elle comporte en outre au moins une structure escamotable (15, 17, 46) portant les outils mobiles (35, 52), cette structure escamotable (15, 17, 46) pouvant prendre une position escamotée dans laquelle elle libère un espace en regard du support (9, 58) pour faciliter le positionnement d'une peau sur le support et une position opérationnelle dans laquelle elle maintient les outils mobiles (35, 52) en position de travail vis-à-vis d'une peau positionnée sur le support (9, 58).

2. Machine selon la revendication 1, adaptée à une peau (44) comportant des retours latéraux (54) donnant une forme concave à la peau et délimitant un volume intérieur (56) dans la concavité de la peau.

3. Machine de soudage sans poinçonnage selon la revendication 2, dans laquelle le support (9) est agencé pour recevoir une peau orientée avec ses retours latéraux dirigés vers le haut.

4. Machine de poinçonnage et éventuellement soudage selon la revendication 2, dans laquelle le support (58) est agencé pour recevoir une peau (44) orientée avec ses retours latéraux (54) dirigés vers le bas.

## Patentansprüche

1. Maschine (1, 40) zum Stanzen und/oder Schweißen, an einer Verkleidung aus Kunststoff, eines Karosserieteils eines Kraftfahrzeugs (44), umfassend bewegliche Werkzeuge (35, 52) zum Stanzen und/oder Schweißen, von denen jedes gesteuert wird, um eine Stanz- und/oder Schweißtätigkeit durchzuführen, wobei diese Stanz- und/oder Schweißtätigkeit in drei Schritten durchgeführt wird
a) Bewegen aus einer versenkten Stellung, im Abstand zu der Verkleidung (44), um in eine Arbeitsstellung zu kommen, in Kontakt oder in unmittelbarer Nähe der Verkleidung,
b) Durchführen des Stanzens und/oder des Schweißens, und dann
c) Rückkehren in die versenkte Stellung,
wobei die Maschine ferner einen Träger (9, 58) für die Aufnahme der Verkleidung (44) in einer vorbestimmten Stellung umfasst und wobei der Träger (9, 58) und die beweglichen Werkzeuge (35, 52) so angeordnet sind, dass die Verkleidung, sobald sie auf dem Träger (9, 58) positioniert ist, einen Sicherheitsraum (56) begrenzt, wobei sie gegebenenfalls von einem Schutzschirm (19, 20, 21, 22, 23, 24, 25, 26, 58) ergänzt wird, in dessen Inneren die beweglichen Werkzeuge (35, 50) in Bewegung sind, um die Stanz- und/oder Schweißtätigkeiten an der Verkleidung durchzuführen, wobei die Maschine **dadurch gekennzeichnet ist, dass** sie ferner mindestens eine versenkbare Struktur (15, 17, 46) aufweist, welche die beweglichen Werkzeuge (35, 52) trägt, wobei diese versenkbare Struktur (15, 17, 46) eine versenkte Stellung, in der sie einen dem Träger (9, 58) zugewandten Raum freigibt, um die Positionierung einer Verkleidung auf dem Träger zu vereinfachen, und eine Betriebsstellung einnehmen kann, in der sie die beweglichen Werkzeuge (35, 52)in Arbeitsstellung gegenüber einer auf dem Träger (9, 58) positionierten Verkleidung hält.

2. Maschine nach Anspruch 1, die für eine Verkleidung (44) eingerichtet ist, die seitliche Rücksprünge (54) aufweist, die der Verkleidung eine konkave Form verleihen und einen Innenraum (56) in der Konkavität der Verkleidung begrenzen.

3. Maschine zum Schweißen ohne Stanzen nach Anspruch 2, wobei der Träger (9) angeordnet ist, um eine Verkleidung aufzunehmen, deren seitliche Rücksprünge nach oben weisen.

4. Maschine zum Stanzen und gegebenenfalls zum Schweißen nach Anspruch 2, wobei der Träger (58) angeordnet ist, um eine Verkleidung (44) aufzunehmen, deren seitliche Rücksprünge (54) nach unten weisen.

## Claims

1. Machine (1, 40) for stamping and/or welding onto a plastic skin of a motor vehicle bodywork part (44), comprising moving tools (35, 52) for stamping and/or welding, each being adjusted to perform a stamping and/or welding operation, this stamping and/or welding operation being carried out in three stages:
a) moving from a retracted position, away from the skin (44), to come into a working position, in contact with or in close proximity to the skin,
b) performing the stamping and/or welding, then
c) returning to the retracted position,
the machine further comprising a support (9, 58) for receiving the skin (44) in a predetermined position, and wherein the support (9, 58) and the moving tools (35, 50) are arranged so that the skin, once positioned on the support (9, 58), defines, possibly being completed by a protective screen (19, 20, 21, 22, 23, 24, 25, 26, 58), a safety volume (56) inside which the moving tools (35, 50) move to perform the stamping and/or welding operations on the skin, the machine being **characterised in that** it further comprises at least one retractable structure (15, 17, 46) carrying the moving tools (35, 52), this retractable structure (15, 17, 46) being able to take up a retracted position in which it releases a space opposite the support (9, 58) to facilitate the positioning of a skin on the support and an operational position in which it holds the moving tools (35, 52) in a working position relative to a skin positioned on the support (9, 58).

2. Machine according to claim 1, adapted to a skin (44) comprising lateral returns (54) giving the skin a concave shape and defining an inner volume (56) in the skin concavity.

3. Welding machine without stamping according to claim 2, wherein the support (9) is arranged to receive a skin oriented with its lateral returns directed upwards.

4. Stamping and possibly welding machine according to claim 2, wherein the support (58) is arranged to receive a skin (44) oriented with its lateral returns (54) directed downwards.
